# EUROPEAN PATENT APPLICATION

(11) **EP 2 412 524 A1**
(43) Date of publication of application: **01.02.2012**
(21) Application number: 10756078.1
(22) Date of filing: 24.03.2010
(51) Int. Cl.: B32B 27/34, B29C 55/12, B32B 27/40, B29K 77/00, B29L 9/00

(54) **HIGHLY ADHESIVE POLYAMIDE FILM AND PRODUCTION METHOD THEREFOR**

(30) Priority: 25.03.2009 JP 2009074048
(71) Applicant: Unitika, Ltd., Amagasaki-shi, Hyogo 660-0824 (JP)
(72) Inventor: OKUZU, Takayoshi, Uji-shi Kyoto 611-0021 (JP); KUWATA, Hideki, Uji-shi Kyoto 611-0021 (JP)
(74) Representative: Kügele, Bernhard
(86) International application number: PCT/JP2010/055015
(87) International publication number: WO 2010/110282

(57) **Abstract**

Disclosed is an easy adhesion polyamide film including a substrate polyamide film and a primer layer containing an anionic water-dispersible polyurethane resin, formed on at least one side of the substrate polyamide film. The thickness of the primer layer is 0.025 µm or more and 0.250 µm or less. The anionic water-dispersible polyurethane resin has a coating film elongation percentage of 250% or more and a tensile strength of 20 MPa or more. When the easy adhesion polyamide film is subjected to a heat treatment in a helium gas atmosphere at 200°C for 10 minutes, a total amount of the volatile base components evolved from the easy adhesion polyamide film is 0.50 µg/g or less.

## Description

### Technical Field

The present invention relates to a easy adhesion polyamide film and a production method therefor, in particular, an easy adhesion polyamide film suitably used for materials such as packaging materials, electric insulating materials and general industrial materials, and a production method therefor.

### Background Art

A biaxially stretched polyamide film is excellent not only in mechanical properties, optical properties, thermal properties and barrier property, but also in properties such as abrasion resistance, impact resistance and anti-pinhole property, and hence has been widely used as a film for packaging materials for packaging food and others. In such uses, usually various secondary processings such as coating processing with various coating materials, printing processing, deposition processing and lamination processing with other films are applied to the surface of a substrate film. Accordingly, an attempt has been made to enhance the adhesion of the substrate film to the coating substance provided by the secondary processing, by achieving the surface modification of the substrate film by applying to the substrate film a physical treatment such as a corona discharge treatment or a plasma treatment, or alternatively a chemical treatment which activates the film surface by using a chemical such as an acid or an alkali.

However, a method based on a physical treatment is simple in the operation steps involved, but achieves insufficient adhesion. A method based on a chemical treatment is disadvantageously complicated in the operation steps involved and aggravates the work environment and others.

When a polyamide film is used for the purpose of packaging food, the polyamide film is generally subjected to a printing processing and then laminated with a sealant film. However, in the case where the adhesion strength between both of the films is weak, when a boiling treatment or a retorting treatment is applied for sterilization, disadvantageously occurs the so-called delamination phenomenon in which occurs the detachment between the polyamide film as the substrate and the sealant film.

For the purpose of solving such problems as described above, in addition to the above-described physical and chemical treatment methods, there is a method in which a primer coating agent having an adhesion activity is applied to the substrate film so as to form by lamination an easy adhesion coating film (hereinafter referred to as a "primer layer"). This method is widely used, for example, because this method permits the selection of primer components according to various top coat layers.

From the viewpoint of the workability, safety and cost, aqueous resins are often used as the constituent component of the primer layer. Among such aqueous resins, in particular, resins such as polyurethane resin, polyester resin and acrylic resin are used for the purpose of improving the adhesion with a coating layer, an ink layer, a deposited layer as the top coat layer.

JP2000-026798A and JP-H3-55302B describe films in which a high adhesiveness is maintained, even after a hot water treatment such as a boiling treatment or a retorting treatment, by using a primer coating agent containing a polyurethane resin having specific physical properties.

However, JP2000-026798A describes, as a specific example, only an example based on a post-coating method in which coating is performed for a polyester film having been stretched. In a polyamide film in which a primer layer has been formed by the post coating method, when a hot water treatment such as a boiling treatment or a retorting treatment is applied, the physical properties of the film are significantly impaired, and the use of the film as products is made difficult.

JP-H3-55302B describes an invention in which the adhesion between the primer layer and an inorganic deposition layer is improved. Accordingly, in the invention described in JP-H3-55302B, there is room for improvement for the adhesion with an ink or an adhesive constituted with organic components after a hot water treatment such as a boiling treatment or a retorting treatment.

### Summary of Invention

### Technical Problem

Recently, food safety has attracted attention as an important issue, and accordingly the retorting treatment that performs hot water treatment under high-temperature high-pressure conditions has been increasing in proportion in the sterilization step.

Under such circumstances, an object of the present invention is to provide an easy adhesion polyamide film having a high adhesiveness even after the hot water treatment such as a boiling treatment or a retorting treatment.

### Solution to Problem

The present inventors have perfected the present invention by discovering that by controlling the thickness of the primer layer of the easy adhesion polyamide film, the physical properties of the polyurethane resin used as an easy adhesion coating material and the amount of the volatile base components remaining in the primer layer, the surface properties of the coating film are improved, and in particular, the adhesiveness after the hot water treatment such as a boiling treatment or a retorting treatment is improved.

Specifically, the gist of the present invention is as follows.

(1) An easy adhesion polyamide film including: a substrate polyamide film; and a primer layer containing an anionic water-dispersible polyurethane resin, formed on at least one side of the substrate polyamide films, wherein: the thickness of-the primer layer is 0.025 µm or more and 0.250 µm or less; the anionic water-dispersible polyurethane resin has a coating film elongation percentage of 250% or more and a tensile strength of 20 MPa or more; and when the easy adhesion polyamide film is subjected to a heat treatment in a helium gas atmosphere at 200°C for 10 minutes, the total amount of the volatile base components evolved from the easy adhesion polyamide film is 0.50 µg/g or less.

(2) A laminate wherein: a laminate adhesive layer and a heat seal layer are laminated in this order, directly or through the intermediary of an ink printed layer, on the primer layer of the easy adhesion polyamide film according to (1); and in the laminate, the laminate strength (X) with wetting water in the original state is 3 N/cm or more, and the ratio (Y/X) of a laminate strength (Y) with wetting water after a hot water treatment at 120°C for 30 minutes to the laminate strength (X) with wetting water in the original state is 0.5 or more.

(3) A production method for the easy adhesion polyamide film according to (1), including: coating at least one side of the substrate polyamide film before oriented crystallization with an aqueous coating material containing the anionic water-dispersible polyurethane resin; biaxially stretching the substrate polyamide film together with the applied aqueous coating material; and subjecting the substrate polyamide film to oriented crystallization by heat treating, after biaxial stretching, the substrate polyamide films.

(4) The production method for the easy adhesion polyamide film according to (3), wherein a simultaneous biaxial stretching is performed.

(5) A production method for the easy adhesion polyamide film according to claim 1, comprising: uniaxially stretching the substrate polyamide film in a first direction; coating at least one side of the uniaxially stretched substrate polyamide film with the aqueous coating material containing the anionic water-dispersible polyurethane resin; uniaxially stretching the substrate polyamide film together with the applied aqueous coating material, in a second direction perpendicular to the first direction; and subsequently subjecting the substrate polyamide film to oriented crystallization by heat treating the substrate polyamide film.

### Advantageous Effects of Invention

According to the present invention, there is obtained an easy adhesion polyamide film having excellent adhesiveness after the processing treatment such as coating or printing. Moreover, such adhesiveness is maintained even after the hot water treatment such as a boiling treatment or a retorting treatment. Such an easy adhesion polyamide film of the present invention can be suitably used as materials such as packaging materials, electric insulating materials and general industrial materials. Such an easy adhesion polyamide film of the present invention is especially appropriate as the materials, in particular, in the food packaging field in which a boiling treatment or a retorting treatment is often performed after printing has been performed on the film.

Further, the easy adhesion polyamide film of the present invention has advantages such that this film is obtained in a simple and easy manner by coating a polyamide film with an aqueous coating material containing a polyurethane resin and by drying the coated film, the thickness of the film can be easily controlled, and so on. Consequently, the easy adhesion polyamide film of the present invention is excellent in productivity and industrially advantageous.

### Description of Embodiments

Hereinafter, the present invention is described in detail.

The substrate polyamide film used in the present invention is not particularly limited as long as the substrate polyamide film is a film formed of a polyamide resin. Examples of the production method for the substrate polyamide film include extrusion molding, injection molding, blow molding, stretching blow molding and drawing molding. The substrate polyamide film may be constituted with a single layer, or may be a film constituted with a plurality of layers formed by simultaneous melt extrusion or lamination. However, the substrate polyamide film constituted with a single layer is preferable because such a substrate polyamide film can be easily produced.

The polyamide resin as referred to herein means a thermoplastic polyamide resin having oriented crystallinity. Specific examples of such a polyamide resin include nylon 6, nylon 66, nylon 610, nylon 11, nylon 12, nylon MXD6 (polymetaxylylene adipamide), copolymers of these mainly composed of these and mixtures of these mainly composed of these. Nylon 6, which is excellent in cost performance, is particularly preferable.

To the polyamide resin, where needed, one or two or more of additives such as an antioxidant, an antistatic agent, an ultraviolet absorber, a lubricant and a preservative agent can be added. Appropriately, the mixing amounts of these additives are in a range from 0.001 to 5.0 parts by mass in terms of the total amount per 100 parts by mass of the resin.

With the substrate polyamide film, a reinforcing material can be mixed for the purpose of ensuring the strength as packaging materials or the like. Examples of the reinforcing material include: fibrous reinforcing materials such as glass fiber, aromatic polyamide fiber, carbon fiber, pulp and cotton linter; powdery reinforcing materials such as carbon black and white carbon; and flaky reinforcing materials such as glass flake and aluminum flake. These may be used each alone or in combinations of two or more thereof. Appropriately, the mixing amounts of the reinforcing materials are 2 to 150 parts by mass in terms of the total amount per 100 parts by mass of the polyamide resin.

Further, with the substrate polyamide film, namely, the polyamide resin, for example, for the purpose of bulking the resin, the following fillers can be mixed: heavy or soft calcium carbonate, mica, talc, kaolin, gypsum, clay, barium sulfate, alumina powder, silica powder and magnesium carbonate. One or two or more of these fillers can be used. Appropriately, the mixing amounts of these fillers are 5 to 100 parts by mass in terms of the total amount per 100 parts by mass of the polyamide resin.

With the substrate polyamide film, for example, for the purpose of improving the gas-barrier property, scale-like inorganic fine powders such as water swellable mica and clay may be mixed. Appropriately, the mixing amounts of the scale-like inorganic fine powders are 5 to 100 parts by mass in terms of the total amount per 100 parts by mass of the polyamide resin.

To the polyamide resin, for the purpose of enhancing the light blocking property and the beautiful appearance of the film, one or two or more white pigments can be added. As such white pigments, a wide variety of heretofore known white pigments can be used. Specific examples of such pigments include titanium oxide, barium sulfate, zinc oxide, zinc sulfate and calcium carbonate. Preferable among these is titanium oxide from the viewpoint of optical density. Appropriately, the mixing amounts of these white pigments are 3 to 40 parts by mass in terms of the total amount per 100 parts by mass of the polyamide resin.

The substrate polyamide film may be of a multilayer structure constituted with two or more polyamide resin layers which are different from each other in the type of the polyamide resin, and in the component constitution involving the ingredients such as the above-described additives, reinforcing agent, filler, scale-like inorganic powder to improve the gas-barrier property, and white pigment to improve the light blocking property and the beautiful appearance.

The primer layer formed on at least one side of the substrate polyamide film is described. For the primer layer, an anionic water-dispersible polyurethane resin is used. The resin is formed by coating the surface of the substrate polyamide film with an aqueous coating material.

A polyurethane resin is a polymer obtained, for example, from the reaction between a multifunctional isocyanate and a hydroxyl group-containing compound. Specific examples of such a polyurethane resin may include the polyurethane resins obtained from the reaction between the following multifunctional isocyanates and the following hydroxyl group-containing compounds. Examples of the multifunctional isocyanates include aromatic polyisocyanates such as tolylene diisocyanate, diphenylmethane isocyanate and polymethylene polyphenylene polyisocyanate and aliphatic polyisocyanates such as hexamethylene diisocyanate and xylene isocyanate, and examples of the hydroxyl group-containing compounds include polyether polyols, polyester polyols, polyacrylate polyols and polycarbonate polyols.

The anionic water-dispersible polyurethane resin used in the present invention is prepared by introducing an anionic functional group into a polyurethane resin. Examples of the method for introducing an anionic functional group into a polyurethane resin include a method in which a diol having an anionic functional group or the like is used as a polyol component, and a method in which a diol having an anionic functional group or the like is used as a chain extender. Examples of the diol having an anionic functional group include: aliphatic carboxylic acids such as glyceric acid, dioxymaleic acid, dioxyfumaric acid, tartaric acid, dimethylolpropionic acid, dsmethylolbutanoic acid, 2,2-dimethylolvaleric acid, 2,2-dimethylolpentanoic acid, 4,4-di(hydroxyphenyl)valeric acid and 4,4-di(hydroxyphenyl)butyric acid; and aromatic carboxylic acids such as 2,6-dioxybenzoic acid.

In general, for the purpose of dispersing in water an anionic polyurethane resin, volatile bases are used. The volatile bases are not particularly limited with respect to the types thereof, and heretofore known volatile bases can be used. Specific examples of such volatile bases include ammonia, methylamine, ethylamine, dimethylamine, diethylamine, triethylamine, morpholine and ethanolamine. Among these, triethylamine is more preferable because triethylamine results in a satisfactory liquid stability of the water-dispersed polyurethane resin, and additionally has a comparatively low boiling point to lead to a small residual amount thereof in the primer layer.

The polyurethane resin used in the present invention is required to have a coating film elongation percentage of 250% or more, and more preferably has a coating film elongation percentage of 300% or more. When the elongation percentage of the polyurethane resin is less than 250%, the cohesion force of the resin coating film is improved, but the flexibility and the impact resistance of the coating film are degraded, and hence, after applying to the primer layer the processing treatment such as coating or printing, the adhesion to the processed object is degraded.

The polyurethane resin used in the present invention is required to have a tensile strength of 20 MPa or more; and has a tensile strength of preferably 25 MPa and more preferably 30 MPa or more. When the tensile strength of the polyurethane resin is less than 20 MPa, after applying to the primer layer the processing treatment such as coating or printing, the adhesion to the processed object is improved before hot water treatment, but the heat resistance of the primer layer is low. Accordingly, when a processing treatment such as coating or printing is applied to the primer layer, the adhesion to the processed object after hot water treatment tends to be significantly impaired. When the tensile strength of the polyurethane resin is less than 20 MPa, the cohesion force of the resin coating film is degraded and the antiblocking property of the resin coating layer is degraded.

In the present invention, for the purpose of forming the primer layer, commercially available particular water-dispersible polyurethane resins can be preferably used. Examples of such commercially available water-dispersible polyurethane resins include: the products manufactured by DIC Corp. such as Hydran ADS-110, Hydran ADS-120, Hydran KU-400SF, Hydran HW-311, Hydran HW-312B, Hydran HW-333, Hydran AP-20, Hydran APX-101H and Hydran AP-60LM; the products manufactured by Dai-ichi Kogyo Seiyaku Co., Ltd. such as Super Flex 107M, Super Flex 150, Super Flex 150HS, Super Flex 410, Super Flex 420NS, Super Flex 460, Super Flex 460S, Super Flex 700, Super Flex 750 and Super Flex 840; the products of Mitsui Chemicals Polyurethanes, Inc. such as Takelac W-6010, Takelac W-6020, Takelac W-511, Takelac WS-6021 and Takelac WS-5000; and the products of DSM Neoresins, Inc., such as NeoRez R9679, NeoRez R9637, NeoRez R966 and NeoRez R972.

In the easy adhesion polyamide film of the present invention, a primer layer containing an anionic water-dispersible polyurethane resin is formed on at least one side of the substrate polyamide film. The thickness of the primer layer is required to be 0.025 to 0.250 µm, and is preferably 0.050 to 0.120 µm. When the thickness of the primer layer is less than 0.025 µm, it is difficult to uniformly form a flawless coating film on the substrate film. Consequently, when a processing treatment such as coating or printing is applied to the primer layer, the adhesion to the processed object after hot water treatment such as a boiling treatment or a retorting treatment is degraded. On the other hand, when the thickness of the primer layer exceeds 0.250 µm, it requires a large amount of heat to make equal to or less than the value specified in the present invention the total amount of the volatile base components evolved from the easy adhesion polyamide film. Additionally, when the thickness of the primer layer exceeds 0.250 µm, further improvement of the adhesiveness with the increase of the thickness is slight to lead to economic inefficiency.

In the easy adhesion polyamide film of the present invention, the total amount of the volatile base components evolved from the primer layer is required to be 0.50 ppm or less, and is preferably 0.20 ppm or less. When the volatile base components remain in the primer layer in a content exceeding 0.50 ppm, the water resistance of the primer layer is degraded, and in the case where a processing treatment such as coating or printing is applied to the primer layer, the adhesion to the processed object with wetting water is degraded. Additionally, in the case where the easy adhesion polyamide film is used for food packaging materials or the like, the safety enhancing effect tends to be impeded.

The glass transition point of the polyurethane resin is not particularly limited; however, in consideration of the blocking of the film and the like, the glass transition point of the polyurethane resin is preferably 20°C or higher and more preferably 30°C or higher.

To the easy adhesion polyamide film of the present invention, for the purpose of improving the properties such as the water resistance and heat resistance of the primer layer, a melamine resin can be added as a curing agent in an amount of 1 to 30 parts by mass in relation to 100 parts by mass of the polyurethane resin.

Typical examples of such a melamine resin include tri(alkoxymethyl)melamine. Examples of such an alkoxy group include a methoxy group, an ethoxy group, a propoxy group and a butoxy group. various melamine resins can be used each alone or simultaneously in combinations of two or more thereof.

The solid content concentration of the polyurethane resin in the aqueous coating material can be appropriately modified according to the specifications of the involved coating apparatus and the involved dryingheating apparatus. However, when a too dilute solution is used, disadvantageously the drying step tends to take a long time. On the other hand, when the solid content concentration is too high, it is difficult to obtain a uniform coating material, and hence the coatability tends to suffer from troubles. From such viewpoints, the solid content concentration of the polyurethane resin in the aqueous coating material falls preferably within a range from 3 to 30% by mass.

To the aqueous coating material, in addition to the polyurethane resin as the main component, a surfactant may be added for the purpose of improving the coatability at the time of coating the substrate film with the coating material. Such a surfactant promotes the wettability of the aqueous coating material to the substrate film. Examples of such a surfactant may include: anionic surfactants such as polyethylene alkyl phenyl ether, polyoxyethylene-fatty acid ester, glycerin fatty acid ester, fatty acid metal soaps, alkyl sulfuric acid salts, alkylsulfonic acid salts and alkylsulfosuccinic acid slats; and nonionic surfactants such as acetylene glycol. Preferably the surfactant is contained in the aqueous coating material in a content of 0.01 to 1% by mass. When the surfactant bleeds out or remains in the primer layer, there occurs an adverse possibility that the adhesiveness after the hot water treatment such as a boiling treatment or a retorting treatment is degraded. Accordingly, the surfactant used is preferably volatilized in the course of the heat treatment in the production process of the easy adhesion polyamide film.

The aqueous coating material may contain, as added thereto, inorganic or organic particles, for the purpose of imparting the antiblocking property to the primer layer to be formed. Examples of such inorganic particles may include the particles of calcium carbonate, magnesium carbonate, calcium oxide, zinc oxide, magnesium oxide, silicon oxide, sodium silicate, aluminum hydroxide, iron oxide, zirconium oxide, barium sulfate, titanium oxide and carbon black. Examples of such organic particles may include the particles of acrylic crosslinked polymer, styrene crosslinked polymer, phenolic resin, nylon resin and polyethylene wax. When inorganic or organic particles are used, the particle size thereof is preferably 0.0001 to 5 µm and more preferably 0.01 to 1 µm. The addition amount of such particles is preferably more than 0% by mass and 1.0% by mass or less in the aqueous coating material, and is preferably more than 0% by mass and 10% by mass or less in the coating film to be obtained.

The production method for the easy adhesion polyamide film of the present invention is described.

In a first aspect of the production method of the present invention, at least one side of the substrate polyamide film before the oriented crystallization is coated with an aqueous coating material containing the anionic water-dispersible polyurethane resin as the main component to form the coating film of the aqueous coating material, then the substrate film before the oriented crystallization is biaxially stretched together with the coating film, and then the substrate polyamide film is subjected to oriented crystallization by heat treating.

In a second aspect of the production method of the present invention, the substrate polyamide film having been uniaxially stretched in a first direction is coated with an aqueous coating material, then the substrate film is uniaxially stretched together with the aqueous coating material in a second direction perpendicular to the first direction, and then the substrate polyamide film is subjected to oriented crystallization by heat treating.

The method for coating the film with the aqueous coating material is not particularly limited. Examples of such a method may include common methods such as gravure roll coating, reverse roll coating, wire bar coating and air knife coating.

According to the production method of the present invention, by incorporating the step of forming the primer layer by coating with the aqueous coating material into the film production step, the coating material can be dried simultaneously in the heat treatment step aiming at the heat fixation of the polyamide film, and hence the simplification of the steps can be achieved. Moreover, the temperature condition of the heat treatment step is such that the temperature can be made higher as compared to the heating conditions of the case where the film is coated with the coating material after the completion of the oriented crystallization based on biaxial stretching and then the coating material is dried. Accordingly, such a temperature condition is advantageous for the reduction of the volatile base components in the primer layer. On the other hand, when the biaxially stretched film for which the oriented crystallization has been completed is heat treated for drying the coating material under the conditions comparable with the conditions of the heat treatment step, the physical properties of the film are significantly impaired by such a heat treatment. Additionally, a plurality of times of heat treatments are required to be economically inefficient.

Examples of the biaxial stretching method of the polyamide film include a simultaneous biaxial stretching method and a sequential biaxial stretching method. In the simultaneous biaxial stretching method, the substrate polyamide film before the oriented crystallization is coated with the aqueous coating material, and then the substrate polyamide film is simultaneously biaxially stretched together with the coating film. In the sequential biaxial stretching method, the substrate polyamide film having been uniaxially stretched in a first direction is coated with the aqueous coating material to form a coating film, and successively the substrate film is uniaxially stretched in a second direction perpendicular to the first direction together with the coating film. In either of the stretching methods, the substrate polyamide film is subjected to oriented crystallization, namely, heat fixation by heat treating after the stretching.

For the production of the easy adhesion polyamide film of the present invention, the simultaneous biaxial stretching method is preferable. As compared to the sequential biaxial stretching method, the simultaneous biaxial stretching method is allowed to set the temperature of the stretching step at a higher temperature, consequently the amount of the heat applied to the film after coating with the aqueous coating material can be set at a larger value, and hence the amount of the volatile base components remaining in the primer layer can be reduced more efficiently.

Specifically, in the simultaneous biaxial stretching method, the polyamide film before the oriented crystallization is stretched under the temperature condition of 70 to 250°C and more preferably 100 to 230°C while the both widthwise ends of the film are being gripped. On the other hand, in the sequential biaxial stretching method, the polyamide film before the oriented crystallization is stretched in the first direction by passing the polyamide film through a group of rollers heated at 45 to 80°C, preferably, 50 to 60°C, different in circumferential speed from each other, and then the polyamide film is stretched in the second direction under the temperature condition of 70 to 150°C, preferably, 80 to 120°C, while the both widthwise ends of the film are being gripped. The stretching temperature of the sequential biaxial stretching method is lower than the stretching temperature of the simultaneous biaxial stretching method because when a high temperature stretching is performed in the sequential biaxial stretching method, the degree of crystallization of the polyamide film comes to be too high, and hence sometimes the stretching at an intended magnification is made impossible, and sometimes the physical properties required for the polyamide film are significantly impaired.

The film having been stretched with the both widthwise ends of the film being gripped is heat treated, namely, heat fixed under the condition that the both widthwise ends of the stretched film are still being gripped. In the production method of the present invention, the temperature of the heat fixation is preferably 180 to 250°C and more preferably 210 to 230°C. When the temperature of the heat fixation is lower than 180°C, the thermal dimensional stability of the stretched oriented film is sometimes made high, or the amount of the volatile base components remaining in the primer layer is sometimes increased. Accordingly, when a processing treatment such as coating or printing is applied to the primer layer, the adhesion, which is a target of the present invention, to the processed object with wetting water tend to be degraded. When the temperature of the heat fixation exceeds 250°C, such a temperature is equal to or higher than the melting point of the polyamide resin, and hence it is made impossible to produce the stretched film as the case may be.

The easy adhesion polyamide film of the present invention is excellent in the adhesion to the processed object such as the coating material or the ink when different secondary processing treatments such as coating and printing with ink are applied to the surface of the primer layer, and is also excellent in the adhesion to the sealant film. Accordingly, the easy adhesion polyamide film of the present invention can be used as a laminate having been subjected to secondary processing treatments or subjected to lamination with a sealant film, and is high in utility value as the substrate film, for example, for packaging and general industrial use. The easy adhesion polyamide film of the present invention also has an excellent adhesiveness even after the hot water treatment such as a boiling treatment or a retorting treatment and excellent in printability, and hence can be particularly suitably used in the field of food packaging.

In the laminate, the laminate strength (X) with wetting water in the original state is 3 N/cm or more, and a ratio (Y/X) of a laminate strength (Y) after a hot water treatment at 120°C for 30 minutes with wetting water to the laminate strength (X) in the original state with wetting water is preferably 0.5 or more. The ratio (Y/X) is more preferably 0.6 or more and furthermore preferably 0.7 or more. In the case where the ratio (Y/X) is less than 0.5, when packaging bags are formed with the laminate, the contents are filled in the bags and the bags are sealed, and the sealed bags are further subjected to a hot water treatment, bag breakage and unsealing failure tend to occur.

### Examples

Hereinafter, Examples of the present invention are described in detail. The measurement methods of various physical properties and the evaluation methods of the effects in following Examples and Comparative Examples are as follows.

### (1) Laminate Strength of Printed Film

First, printing was performed on the primer layer of an easy adhesion polyamide film with a gravure roll. In the printing, a polychrome printing was performed in which printing was made with an indigo blue ink and then with a white ink. The film having been subjected to printing was dry laminated with an unstretched polypropylene film (trade name: RXC-21, thickness: 50 µm, manufactured by Tohcello Co., Ltd.) by using a dry laminating adhesive (Dic Dry LX500/KR90S, manufactured by DIC Corp.) for use in retorting applications. Then, by applying the aging recommended for this adhesive, a laminate film was obtained.

In the measurement of the laminate strength, a 15-mm-wide specimen was sampled from the laminate film; the interface between the unstretched polypropylene film and the primer layer of the easy adhesion polyamide film was peeled off from one end of the specimen in the atmosphere of 20°C and 65% RH; the peel strength was measured with a tensile tester (AGS-100B, manufactured by Shimadzu Corp.) on the basis of the 180° sealant bend method under the condition of a tensile speed of 300 mm/min; and the measured result was taken as the laminate strength.

The same measurement was also performed for the laminate film after having been subjected to a retorting treatment (120°C, 1.8 atm, 30 minutes).

In the peel test, on the assumption of the case where a liquid was filled as the contents, based on the practical applications of packaging material, the laminate strength with wetting water in the condition that water wetted the peel interface was measured.

Further, for the film having been subjected to a retorting treatment, by observing the peel interface of the film having been subjected to the peel test, the adhesion between the easy adhesion polyamide film and the ink was evaluated. The concerned evaluation standards are as follows.

Grade 3: The ink remains on the primer layer side in a proportion of 50% or more.

Grade 2: The ink remains on the primer layer side in a proportion of 25% or more and less than 50%.

Grade 1: The ink remains on the primer layer side in a proportion of 1% or more and less than 25%.

Grade 0: The ink remains on the primer layer side in a proportion of less than 1%.
In this set of the evaluation standards, the percentages are represented in terms of area proportion. For practical purposes, the grade equal to or higher than Grade 2 in which the ink remains on the primer layer side in a proportion of 25% or higher is preferable, and Grade 3 is more preferable.

### (2) Volatile Base Components in Easy Adhesion Polyamide Film

About 15 mg of the easy adhesion polyamide film was accurately weighed and packed in a sample cup, and heated at 200°C for 10 minutes in a pyrolyzer (Model No. PY-2020iD, manufactured by Frontier Labo, K.K.), and the evolved volatile components were subjected to a GC/MS (GC: Agilent 6890N, MS: Agilent 5975C) measurement. The preparation of the calibration curves was performed for the volatile base components detected from the aqueous coating material, by using the hexane/hexadecane standard solutions respectively having the sample concentrations of 0, 10, 50, 100, 200 and 500 ppm, and by performing the GC/MS measurement for 5 µL of each of the solutions packed in a sample cup, under the same heating conditions as for the test sample. In the GC/MS measurement, when the amount of the volatile base component was less than 0.05 µg/g, the separation of the peak was difficult and hence the amount of the volatile base component was evaluated as equal to or less than the detection limit (n.d.).

### [GC/MS Conditions]

Column: UAS (MS/HT)-30M-0.25F
Carrier gas: Helium, initial flow rate: 1.0 mL/min

### (3) Properties of Urethane Resin

The aqueous coating material, containing a urethane resin as the main component, for forming the primer layer was cast on a glass plate, the cast aqueous coating material was dried at room temperature for 24 hours, and then heat treated at 150°C for 10 minutes to prepare a 50-µm-thick film. For each of the specimens obtained by cutting the prepared film into 5-mm-wide strips, the tensile strength and the elongation percentage of were measured with a tensile tester (Model No. AGS-100B, manufactured by Shimadzu Corp.) under the condition of a tensile speed of 300 mm/min.

The urethane emulsions used in following Examples and Comparative Examples were all anionic polyurethane aqueous dispersions. The tensile strengths and the elongation percentages of the urethane resins were as described in Table 1.

### [Example 1]

### (Aqueous Coating Material)

By diluting with ion-exchanged water the urethane emulsion, Hydran KU-400SF (solid content: 25% by mass) manufactured by DIC Corp., an aqueous coating material having a resin solid content of 10% by mass was prepared.

### (Easy Adhesion Polyamide Film)

With an extruder (diameter: 75 mm, L/D=45, mild compression type, single screw) equipped with a T-die, nylon 6 (relative viscosity: 3.03) containing 0.1% by mass of silica having an average particle size of 1.0 µm was extruded from the orifice of the T-die under the condition of 270°C, into a sheet shape. By bringing the sheet-shaped product into close contact with a casting roll regulated to have a surface temperature of 18°C, the sheet-shaped product was rapidly cooled to yield a 150-µm-thick unstretched polyamide film. The unstretched film was introduced into a water tank and regulated to have a water absorption percentage of 4.0% by mass. The water-absorbed unstretched film was coated with the above-described aqueous coating material by an air knife coating method, and then dried with a drier under the conditions of 60°C and 10 seconds. The coated unstretched film was introduced into a simultaneous biaxial stretching machine and subjected to a simultaneous biaxial stretching with a longitudinal magnification of 3.3 and a transverse magnification of 3.0, under the conditions that the preheating temperature was 225°C, time was 5 seconds, the stretching temperature was 195°C and the stretching time was 3 seconds. Successively, the stretched film was heat treated under the conditions that the heat fixation temperature was 215°C and the heat fixation time was 5 seconds, to prepare an easy adhesion polyamide film.

In the easy adhesion polyamide film, the thickness of the substrate polyamide film was 15 µm and the thickness of the primer layer was 0.060 µm. The easy adhesion polyamide film was heated at 200°C for 10 minutes in a pyrolyzer in a helium atmosphere, and the evolved outgas was measured with GC/MS to detect triethylamine (TEA) in an amount of 0.08 µg/g.

### (Printed Laminate Film)

Printing was performed as described above on the surface of the primer layer in the easy adhesion polyamide film by a direct gravure printing method with a polyurethane ink (trade name: Fine Star R39 indigo blue/R631 white, manufactured by Toyo Ink Manufacturing Co., Ltd.) and the printed ink was dried under the conditions of 80°C and 10 seconds. The inked surface of the film was coated as described above with a polyurethane adhesive (Dic Dry LX500/KR90S, manufactured by DIC Corp.) and was dried under the conditions of 80°C and 10 seconds. Next, on the thus treated easy adhesion polyamide film, an unstretched polypropylene film (trade name: RXC-21, thickness: 50 µm, manufactured by Tohcello Co., Ltd.) was dry laminated on a metal roll heat to 80°C by applying a nip pressure of 490 kPa, and then by applying the aging recommended for this adhesive, a laminate film was obtained.

The thickness values of the respective layers after the dry lamination were such that the indigo blue inked layer and the white inked layer were both 1 µm in thickness, and the adhesive layer was 2 µm in thickness. Next, the laminate strength of the indigo blue-white overprinted portion of the film was measured separately before and after the retorting treatment. The measurement results thus obtained are shown in Table 1.

### [Examples 2 to 7]

In each of Examples 2 to 7, an aqueous coating material having a solid content concentration of 10% by mass was obtained in the same manner as in Example 1 except that as compared to Example 1, the polyurethane resin used as the aqueous coating material was altered, and an easy adhesion polyamide film was prepared. The various measurement results are shown in Table 1.

The polyurethanes used are as follows.

Example 2: Urethane emulsion, Hydran ADS-120 (solid content: 50% by mass), manufactured by DIC Corp.

Example 3: Aqueous urethane resin, NeoRez R9679 (solid content: 37% by mass), manufactured by DSM Neoresins, Inc.

Example 4: Aqueous urethane resin, Hydran HW-312B (solid content: 40% by mass), manufactured by DIC Corp.

Example 5: Aqueous urethane resin, Super Flex 460(SF-460) (solid content: 38% by mass), manufactured by Dai-ichi Kogyo Seiyaku Co., Ltd.

Example 6: Aqueous urethane resin, Super Flex 410(SF-410) (solid content: 38% by mass), manufactured by Dai-ichi Kogyo Seiyaku Co., Ltd.

Example 7: Aqueous urethane resin, Takelac W-6010 (solid content: 30% by mass), manufactured by Mitsui Chemicals Polyurethanes, Inc.

### [Example 8]

To an aqueous urethane resin, Hydran KU-400SF, manufactured by DIC Corp., a methylolmelamine resin, Beckamine APM (solid content: 80% by mass) was added as a curing agent in a ratio of 10 parts by mass of solid content of the methylolmelamine resin to 100 parts by mass of the solid content of the polyurethane resin. The resulting mixture was diluted with ion-exchanged water to prepare an aqueous coating material having a resin solid content of 10% by mass. By using the aqueous coating material, an easy adhesion polyamide film was prepared in the same manner as in Example 1. The various measurement results on this film are shown in Table 1.

### [Examples 9 and 10]

Easy adhesion polyamide films were prepared in the same manner as in Example 8 except that as compared to Example 8, the addition amount of Beckamine APM as the curing agent was altered to 20 parts by mass (Example 9) and 30 parts by mass (Example 10) in relation to 100 parts by mass of the polyurethane resin. The various measurement results on these films are shown in Table 1.

### [Examples 11 to 13]

Easy adhesion polyamide films were prepared in the same manner as in Example 1 except that as compared to Example 1, the thickness of the primer layer after stretching was altered to 0.030 µm (Example 11), 0.120 µm (Example 12) and 0.240 µm (Example 13). The various measurement results on these films are shown in Table 1.

### [Example 14]

With an extruder (diameter: 75 mm, L/D=45, mild compression type, single screw) equipped with a T-die, nylon 6 (relative viscosity: 3.03) containing 0.1% by mass of silica having an average particle size of 1.0 µm was extruded from the orifice of the T-die under the condition of 270°C, into a sheet shape. By bringing the sheet-shaped product into close contact with a casting roll regulated to have a surface temperature of 18°C, the sheet-shaped product was rapidly cooled to yield a 150-µm-thick unstretched polyamide film.

The resulting film was longitudinally stretched with a magnification of 2.7 by using a longitudinal stretching machine equipped with a group of heating rollers different in circumferential speed from each other and having a roller temperature set at 55°C.

The film uniaxially stretched in the longitudinal direction was coated with the same aqueous coating material as prepared in Example 1 by an air knife coating method. The laminate composed of the uniaxially stretched film and the coating material was introduced into a transverse stretching machine, the coating film was dried and the temperature of the film was increased at a preheating temperature of 60°C and with a preheating time of 3.5 seconds, and then the laminate was transversely stretched with a magnification of 3.7 at a stretching temperature of 90°C and with a stretching time of 3 seconds. Successively, the stretched film was heat treated under the conditions that the heat fixation temperature was 215°C and the heat fixation time was 5 seconds, to prepare an easy adhesion polyamide film.

In the resulting easy adhesion polyamide film, the thickness of the substrate polyamine film was 15 µm and the thickness of the primer layer was 0.060 µm. The easy adhesion polyamide film was heated at 200°C for 10 minutes in a pyrolyzer in a helium atmosphere, and the evolved outgas was measured with GC/MS to detect triethylamine in an amount of 0.43 µg/g.

### [Comparative Examples 1 to 3]

In each of Comparative Examples 1 to 3, an aqueous coating material having a solid content concentration of 10% by mass was obtained in the same manner as in Example 1 except that as compared to Example 1, the polyurethane resin as the main component of the aqueous coating material was altered. By using these aqueous coating materials, easy adhesion polyamide films were prepared. The various measurement results on these films are shown in Table 1.

The polyurethane resins used are as follows.

Comparative Example 1: Hydran AP-40F (solid content: 22% by mass), manufactured by DIC Corp.

Comparative Example 2: Super Flex 361(SF-361) (solid content: 25% by mass), manufactured by Dai-ichi Kogyo Seiyaku Co., Ltd.

Comparative Example 3: an aqueous polyurethane resin, Takelac W-615 (solid content: 35% by mass), manufactured by Mitsui Chemicals Polyurethanes, Inc.

### [Comparative Examples 4 and 5]

Easy adhesion polyamide films were prepared in the same manner as in Example 1 except that as compared to Example 1, the thickness of the primer layer was set at 0.010 µm (Comparative Example 4) and 0.500 µm (Comparative Example 5). The various measurement results on these films are shown in Table 1.

### [Comparative Example 6]

A biaxially stretched polyamide film (trade name: Emblem, thickness: 15 µm, manufactured by Unitika Ltd.) was coated with the same aqueous coating material as in Example 1 by the Mayer bar coating method, and then the coating material was dried under the conditions of a drying temperature of 120° and a drying time of 10 seconds to prepare an easy adhesion polyamide film. The thickness of the formed primer layer was 0.060 µm. The various measurement results on this easy adhesion polyamide film are shown in Table 1.

### [Comparative Example 7]

An easy adhesion polyamide film was prepared in the same manner as in Comparative Example 6 except that as compared to Comparative Example 6, the drying temperature was altered to 160°C. The various measurement results on this film are shown in Table 1.

### [Comparative Example 8]

An easy adhesion polyamide film was tried to be prepared in the same manner as in Comparative Example 6 except that as compared to Comparative Example 6, the drying temperature was altered to 200°C. However, the drying temperature was too high, and hence the film was contracted to be wrinkled so as to make it difficult to take up the film on a roll. Accordingly, although the measurement of the volatile base components was able to be performed, the performance evaluation of the laminate strength was not able to be performed.

### [Comparative Example 9]

A polyamide film was prepared in the same manner as in Example 1 except that as compared to Example 1, the primer layer was not provided. The various measurement results on this film are shown in Table 1.

**[Table 1]**

| | Urethane resin (A) of primer layer | | | Curing agent (B) | Mixing mass ratio (A/B) | Thickness of primer layer (µm) | Production method | | Volatile base component | | Laminate strength with wetting water (N/cm) | | | Printability |
|---|---|---|---|---|---|---|---|---|---|---|---|---|---|---|
| | Name | Tensile stren gth (Mpa) | Elongation percentage (%) | | | | Coating | Stretching method | Residual amount (µg/g) | Component | Before hot water treatment (X) | After hot water trea tment (Y) | Y/X | Evaluation of ink adhesion after hot water treatm ent |
| Example 1 | KU-400SF | 34 | 340 | Not added | - | 0.060 | In-line | Simultaneus | 0.08 | TEA | 3.5 | 2.6 | 0.74 | 2 |
| Example 2 | ADS-120 | 60 | 700 | Not added | - | 0.060 | In-line | Simultaneous | n.d. | - | 3.8 | 3.1 | 0.82 | 3 |
| Example 3 | NeoRez R9679 | 42 | 350 | Not added | - | 0.060 | In-line | Simultaneus | n.d. | - | 3.8 | 3.0 | 0.79 | 2 |
| Example 4 | HW-312B | 22 | 700 | Not added | - | 0.060 | In-line | Simultaneus | n.d. | - | 3.2 | 1.9 | 0.59 | 3 |
| Example 5 | SF-460 | 25 | 750 | Not added | - | 0.060 | In-line | Simultaneous | n.d. | - | 3.3 | 1.8 | 0.55 | 3 |
| Example 6 | SF-410 | 40 | 250 | Not added | - | 0.060 | In-line | Simultaneous | n.d. | - | 3.2 | 1.8 | 0.56 | 2 |
| Example 7 | W-6010 | 35 | 380 | Not added | - | 0.060 | In-line | Simultaneous | n.d. | - | 3.5 | 2.8 | 0.80 | 2 |
| Example 8 | KU-400SF | 34 | 340 | Beckamine APM | 100/1 0 | 0.060 | In-line | Simultaneous | 0.13 | TEA | 4.0 | 3.2 | 0.80 | 3 |
| Example 9 | KU-400SF | 34 | 340 | Beckamine APM | 100/2 0 | 0.060 | In-line | Simultaneous | 0.12 | TEA | 4.1 | 3.3 | 0.80 | 3 |
| Example 10 | KU-400SF | 34 | 340 | Beckamine APM | 100/3 0 | 0.060 | In-line | Simultaneous | 0.11 | TEA | 3.9 | 3.0 | 0.77 | 3 |
| Example 11 | KU-400SF | 34 | 340 | Not added | - | 0.030 | In-line | Simultaneous | n.d. | - | 3.2 | 2.0 | 0.63 | 2 |
| Example 12 | KU-400SF | 34 | 340 | Not added | - | 0.120 | In-line | Simultaneous | 0.21 | TEA | 3.8 | 2.6 | 0.68 | 2 |
| Example 13 | KU-400SF | 34 | 340 | Not added | - | 0.240 | In-line | Simultaneous | 0.39 | TEA | 3.5 | 2.3 | 0.66 | 3 |
| Example 14 | KU-400SF | 34 | 340 | Not added | - | 0.060 | In-line | Sequential | 0.43 | TEA | 3.0 | 2.0 | 0.67 | 2 |
| Comparative Example 1 | AP-40F | 22 | 30 | Not added | - | 0.060 | In-line | Simultaneous | 0.23 | TEA | 1.8 | 1.2 | 0.67 | 1 |
| Comparative Example 2 | SF-361 | 14 | 1000 | Not added | - | 0.060 | In-line | Simultaneous | n.d. | - | 3.1 | 1.0 | 0.32 | 3 |
| Comparative Example 3 | W-615 | 27 | 220 | Not added | - | 0.060 | In-line | Simultaneous | n.d. | - | 2.5 | 1.3 | 0.52 | 1 |
| Comparative Example 4 | KU-400SF | 34 | 340 | Not added | - | 0.010 | In-line | Simultaneous | n.d. | - | 2.3 | 1.8 | 0.78 | 2 |
| Comparative Example 5 | KU-400SF | 34 | 340 | Not added | - | 0.500 | In-line | Simultaneous | 1.42 | TEA | 2.0 | 0.8 | 0.40 | 2 |
| Comparative Example 6 | KU-400SF | 34 | 340 | Not added | - | 0.060 | Post | - | 2.31 | TEA | 1.2 | 0.5 | 0.42 | 0 |
| Comparative Example 7 | KU-400SF | 34 | 340 | Not added | - | 0.060 | Post | - | 1.01 | TEA | 1.8 | 0.5 | 0.28 | 0 |
| Comparative Example 8 | KU-400SF | 34 | 340 | Not added | - | 0.060 | Post | - | 0.31 | TEA | Evaluation was impossible. | | | |
| Comparative Example 9 | No primer layer was provided. | | | | | - | - | - | n.d. | - | 1.9 | 0.2 | 0 .11 | 0 |

As shown in Table 1, in each of Examples, the coating film elongation percentage and the tensile strength of the polyurethane resin, and the thickness of the primer layer satisfied the ranges specified in the present invention. Accordingly, it was possible to prepare an easy adhesion polyamide film allowing the formation of a laminate in which the laminate strength (X) with wetting water before a hot water treatment at 120°C for 30 minutes was 3 N/cm or more, and a ratio (Y/X) of a laminate strength (Y) with wetting water after the hot water treatment at 120°C for 30 minutes to the laminate strength (X) with wetting water was 0.5 or more. The amount of the evolved volatile base component was also small.

On the contrary, individual Comparative Examples suffered from the following problems.

In each of Comparative Examples 1 to 3, the coating film elongation percentage or/and the tensile strength of the polyurethane resin were smaller than the ranges specified in the present invention. Accordingly, the surface properties of the primer layer were not effective for the inked layer laminated on the primer layer, and consequently the laminate strength and the ink adhesion before the retorting treatment did not satisfy the required performances.

In Comparative Example 4, the thickness of the primer layer was smaller than the range specified in the present invention. Consequently no uniform primer layer was formed, and the obtained film did not satisfy the required performances.

In Comparative Example 5, the thickness of the primer layer was larger than the range specified in the present invention. Consequently the residual amount of the volatile base components was larger than the range specified in the present invention. Moreover, this caused a large decrease of the laminate strength after the retorting treatment, and no required performances were satisfied.

In each of Comparative Examples 6 and 7, when the stretched polyamide film was coated with the aqueous coating material, the amount of heat given to the coating material was too small, and hence the evolved amount of the volatile base components, namely, the residual amount of the volatile base components was larger than the range specified in the present invention. Consequently, the laminate strength after the retorting treatment was significantly decreased and the required performances were not satisfied.

In Comparative Example 8, when the stretched polyamide film was coated with the aqueous coating material, the amount of heat given to the coating material was excessive. Consequently, although the evolved amount of the volatile base components fell within the range specified in the present invention, the polyamide film underwent the occurrence of contraction as described above, so as to make it difficult to take up the film on a roll, and hence the polyamide film was far from being usable as an industrial product.

In Comparative Example 9, no primer layer was provided as described above. Consequently, the laminate strength after the retorting treatment was significantly decreased, and hence the required performances were not satisfied.

## Claims

1. An easy adhesion polyamide film comprising:
a substrate polyamide film; and
a primer layer containing an anionic water-dispersible polyurethane resin, formed on at least one side of the substrate polyamide film,
wherein a thickness of the primer layer is 0.025 µm or more and 0.250 µm or less;
the anionic water-dispersible polyurethane resin has a coating film elongation percentage of 250% or more and a tensile strength of 20 MPa or more; and
when the easy adhesion polyamide film is subjected to a heat treatment in a helium gas atmosphere at 200°C for 10 minutes, a total amount of volatile base components evolved from the easy adhesion polyamide film is 0.50 µg/g or less.

2. A laminate wherein:
a laminate adhesive layer and a heat seal layer are laminated in this order, directly or through the intermediary of an ink printed layer, on the primer layer of the easy adhesion polyamide film according to claim 1; and
in the laminate, a laminate strength (X) with wetting water in an original state is 3 N/cm or more, and a ratio (Y/X) of a laminate strength (Y) with wetting water after a hot water treatment at 120°C for 30 minutes to the laminate strength (X) with wetting water in the original state is 0.5 or more.

3. A production method for the easy adhesion polyamide film according to claim 1, comprising:
coating at least one side of the substrate polyamide film before oriented crystallization with an aqueous coating material containing the anionic water-dispersible polyurethane resin;
biaxially stretching the substrate polyamide film together with the applied aqueous coating material; and
subjecting the substrate polyamide film to an oriented crystallization by heat treating, after biaxial stretching, the substrate polyamide film.

4. The production method for the easy adhesion polyamide film, according to claim 3, wherein a simultaneous biaxial stretching is performed.

5. A production method for the easy adhesion polyamide film according to claim 1, comprising:
uniaxially stretching the substrate polyamide film in a first direction;
coating at least one side of the uniaxially stretched substrate polyamide film with the aqueous coating material containing the anionic water-dispersible polyurethane resin;
uniaxially stretching the substrate polyamide film together with the applied aqueous coating material, in a second direction perpendicular to the first direction; and
subsequently subjecting the substrate polyamide film to an oriented crystallization by heat treating the substrate polyamide film.
